# EUROPEAN PATENT APPLICATION

(11) **EP 4 245 650 A1**
(43) Date of publication of application: **20.09.2023**
(21) Application number: 21892381.1
(22) Date of filing: 12.11.2021
(51) Int. Cl.: B62D 55/265, B62D 55/275, B62D 55/28, B62D 55/24, B62D 55/06, B63B 59/10, B25J 11/00, B25J 5/00

(54) **MAGNETIC TRACK SHOE FOR SHIP-CLEANING APPARATUS**

(30) Priority: 13.11.2020 KR 20200151752; 11.11.2021 KR 20210154549
(71) Applicant: Tas Global Co., Ltd., Busan 46728 (KR)
(72) Inventor: LEE, Dong Wook, Seoul 06098 (KR)
(74) Representative: Keltie LLP
(86) International application number: PCT/KR2021/016584
(87) International publication number: WO 2022/103214

(57) **Abstract**

Disclosed is a magnetic track shoe. The magnetic track shoe includes: a track shoe body of continuous tracks attached to a surface of a ship; a magnet member provided in the track shoe body and attaching the track shoe body to the surface of the ship; and a frictional unit provided in the track shoe body and preventing the track shoe body from damaging the surface of the ship, wherein the track shoe body includes a body inclined portion, and the frictional unit includes a friction inclined portion corresponding to the body inclined portion to prevent the frictional unit from being damaged by a protrusion provided in the surface of the ship.

## Description

### [Technical Field]

The disclosure relates to a magnetic track shoe, and more particularly to a magnetic track shoe for a ship cleaning apparatus, which allows the ship cleaning apparatus to move on the surface of a ship.

### [Background Art]

A robot that cleans a ship underwater has neutral or positive buoyancy.

To attach the robot to the surface of a ship, an underwater propeller and a magnet are mostly used.

An underwater propeller-type robot is attached to the surface of a ship by a reaction caused when water is pushed upwards from the bottom of the robot. The magnet-type robot is attached to the surface of a ferromagnetic ship by magnetic force of a magnet installed in a body bottom of the robot.

The robot is not movable without propelling force or towing force while being attached to the surface of a ship underwater.

To move the robot attached to the surface of a ship, the underwater propeller and the magnet are mostly used. The underwater propeller-type robot moves by a reaction caused when water is pushed backwards from the front of the robot or frontwards from the back of the robot.

The magnet-type robot includes magnets embedded in the wheels or continuous tracks thereof, and moves based on frictional force generated by being attached to the surface of a ferromagnetic ship, and towing force generated by rotating the wheels or the continuous tracks.

The continuous tracks are provided in the form of continuously connecting track shoes.

The track shoe is embedded with the magnet, and is decreased in frictional force as magnetic force weakens due to the nature of the magnet when moving away from a ferromagnetic substance.

The track shoe is provided with a frictional member to prevent the surface of the ship from being scratched and increase the frictional force.

Because the magnet is placed at the center of the track shoe and a frictional member 2000 is attached to the bottom of a track shoe body 1000, there is a gap between the magnet and the surface of the ship. This gap weakens the magnetic force and decreases the frictional force. To increase the frictional force, it is required to decrease the thickness of the frictional member. On the other hand, to increase the life of the frictional member, it is required to increase the thickness of the frictional member, and thus the frictional force decreases. In consideration of both the frictional force and the life, the frictional member needs to have an appropriate thickness, and most of this thickness is merely a few millimeters.

Such continuous tracks have very high frictional force for their sizes and weights as compared those used in land vehicles such as a tank and a bulldozer, and include the frictional member having a thickness of a few millimeters, thereby frequently causing the following problems that seldom arise in the land vehicles.

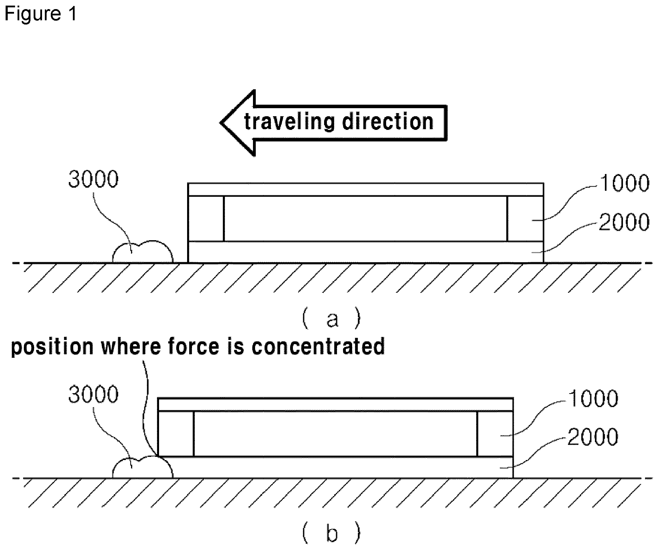

As shown in FIG. 1, there is a welding bead 3000, which is a protrusion having a height of 5 mm or less, on the surface of a ship. The continuous tracks do not cause a trouble when moving forwards and backwards. However, when the continuous tracks rotate in place, the lateral side of the track shoe collides with the protrusion while the track shoe slides on the surface of the ship, thereby causing damage such as tearing and peeling in the frictional member 2000. When the frictional member 2000 is damaged, the track shoe body 1000 of the track shoe comes into direct contact with the surface of the ship, and damages the surface of the ship. In this regard, a solution is required.

The foregoing technical configurations are the background art for helping the understanding of the disclosure, and do not mean the prior art widely known in the art to which the disclosure pertains.

### (Documents of Related Art)

### (Patent Documents)

(Patent document 1) Korean Patent No. 10-2132128 (Hyuncleantech Co., Ltd.), July 2, 2020.

### [Disclosure]

### [Technical Problem]

Accordingly, an aspect of the disclosure is to provide a magnetic track shoe for a ship cleaning apparatus, in which force generated when a lateral side of a track shoe collides with a protrusion such as a welding bead while the track shoe slides sideways is widely distributed to a frictional member through an inclined surface of a lateral portion of the track shoe, thereby preventing the frictional member from damage such as tearing or peeling that occurs as force is concentrated on one place.

### [Technical Solution]

According to an embodiment of the disclosure, there is provided a magnetic track shoe including: a track shoe body of continuous tracks attached to a surface of a ship; a magnet member provided in the track shoe body and attaching the track shoe body to the surface of the ship; and a frictional unit provided in the track shoe body and preventing the track shoe body from damaging the surface of the ship, wherein the track shoe body includes a body inclined portion, and the frictional unit includes a friction inclined portion corresponding to the body inclined portion to prevent the frictional unit from being damaged by a protrusion provided in the surface of the ship

The body inclined portion may be provided in at least one of a left bottom portion and a right bottom portion of the track shoe body with respect to a traveling direction of the continuous tracks, and the friction inclined portion may be provided in at least one of a left bottom portion and a right bottom portion of the frictional unit with respect to the traveling direction of the continuous tracks.

The track shoe body may include: a front wall provided to face a same direction as the traveling direction of the continuous tracks; a rear wall provided at an opposite position to the front wall and disposed to be spaced apart from the front wall; a pair of lateral walls connecting the front wall and the rear wall; and a base body blocking a bottom of an accommodating portion formed by the front wall, the rear wall, and the pair of lateral walls, and the body inclined portion may be provided in at least one lateral wall of the pair of lateral walls.

The frictional unit may include: a frictional body of which an upper surface is in contact with a bottom surface of the track shoe body; and the friction inclined portion provided at an end portion of the frictional body.

The frictional unit may further include a draining groove provided on a bottom portion of the frictional body.

The track shoe body may further include a covering unit coupled to the base body to cover the accommodating portion.

The track shoe body may further include a plurality of groove portions provided on a bottom surface of the bottom portion, and the frictional unit is provided by coating an anti-slip agent or attaching an anti-slip tape to the bottom portion and the body inclined portion.

The magnet member may be molded, coated or plated to prevent corrosion.

The magnetic track shoe may further include a holding block coupled to the track shoe body and coupling the track shoe body to a belt.

The holding blocks may form a pair and are coupled to the belt while facing each other, the holding block may include: a block body pressing the belt in a direction of facing the track shoe body; a first stepped portion provided in the block body and supporting a lateral side of the belt; and a second stepped portion extended from the first stepped portion and supporting a lateral side of the track shoe body.

The belt may include a plurality of uneven members, and the block body may include an uneven groove in which the uneven member is inserted.

The magnetic track shoe may further include a magnet guide provided between the base body and the covering unit of the track shoe body and accommodating an upper portion of the magnet member.

The base body and the frictional unit may be detachably coupled to the magnet guide.

The magnet member may include a plurality of magnet members, and the magnet members disposed adjacent to each other may be different in polarity.

The magnetic track shoe may further include a track guide coupled to the continuous tracks and recessed in a middle portion thereof.

### [Advantageous Effects]

According to embodiments of the disclosure, the edge of the frictional unit is prevented from damage or peeling by the body inclined portion provided in the track shoe body and the friction inclined portion provided in the frictional unit when the ship cleaning apparatus turns or rotates in place.

Further, liquid in a place where the surface of a ship is in underwater contact with the frictional unit is easily drained through the draining grooves provided in the frictional unit.

In addition, the frictional unit is provided by coating the anti-slip agent or attaching the anti-slip tape to the body inclined portion and the bottom portion of the track shoe body, thereby selectively using the frictional unit and enhancing work efficiency.

Further, the magnetic track shoe according to an embodiment is easily coupled to the belt by the holding block, thereby maintaining the coupling stability.

### [Description of Drawings]

FIG. 1 schematically illustrates that a lateral side of a frictional member collides with a welding bead present on the surface of a ship while a track shoe slides transversely to a traveling direction of continuous tracks when an apparatus using the continuous tracks rotates in place.
FIG. 2 schematically illustrates a magnetic track shoe for a ship cleaning apparatus according to a first embodiment of the disclosure.
FIG. 3 is an exploded perspective view of the magnetic track shoe in FIG. 2.
FIG. 4 is a front view of the magnetic track shoe in FIG. 2.
FIG. 5 is a cross-sectional view of the magnetic track shoe in FIG. 2.
FIG. 6 illustrates that a magnetic track shoe according to an embodiment is coupled to a part of a belt.
FIG. 7 schematically illustrates that a plurality of magnet members according to an embodiment is provided, and the magnet members are disposed to be different in polarity.
FIG. 8 schematically illustrates a magnetic track shoe for a ship cleaning apparatus according to a second embodiment of the disclosure.
FIG. 9 schematically illustrates a magnetic track shoe for a ship cleaning apparatus according to a third embodiment of the disclosure.
FIG. 10 schematically illustrates continuous tracks according to an embodiment.
FIG. 11 schematically illustrates that the magnetic track shoe according to an embodiment is coupled to a belt shown in FIG. 10.

### [Best Mode]

To fully understand the disclosure, operational advantages of the disclosure, and objects to be achieved by an embodiment of the disclosure, the accompanying drawings illustrating exemplary embodiments of the disclosure and details described in the accompanying drawings are required to be referred to.

Embodiments of the disclosure will now be described in detail with reference to the accompanying drawings. In the accompanying drawings, like numerals refer to like elements.

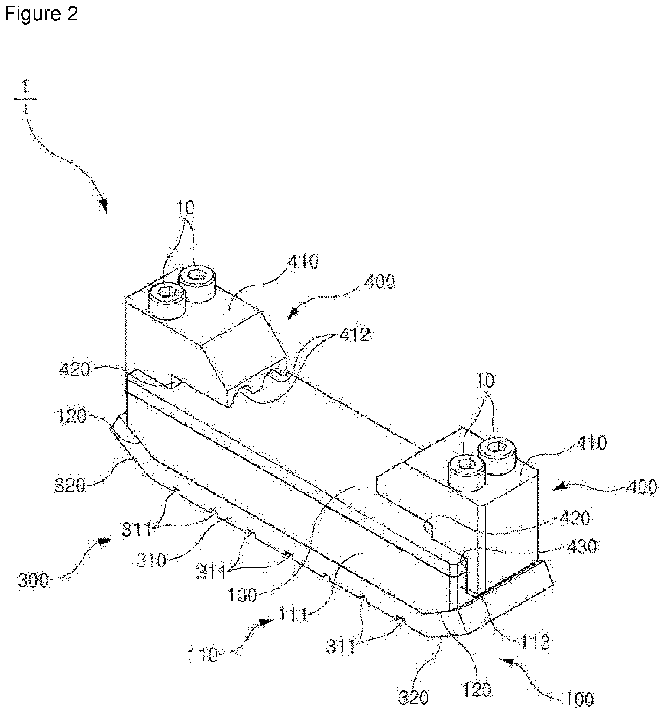

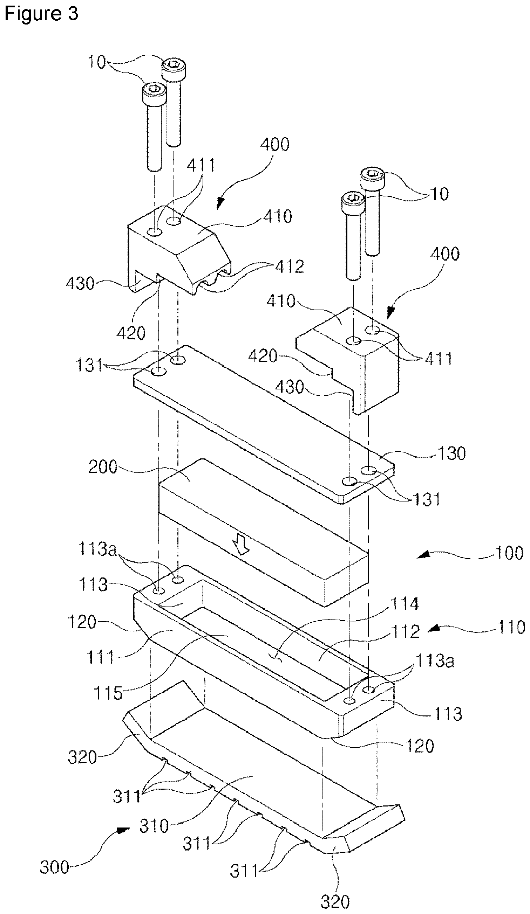

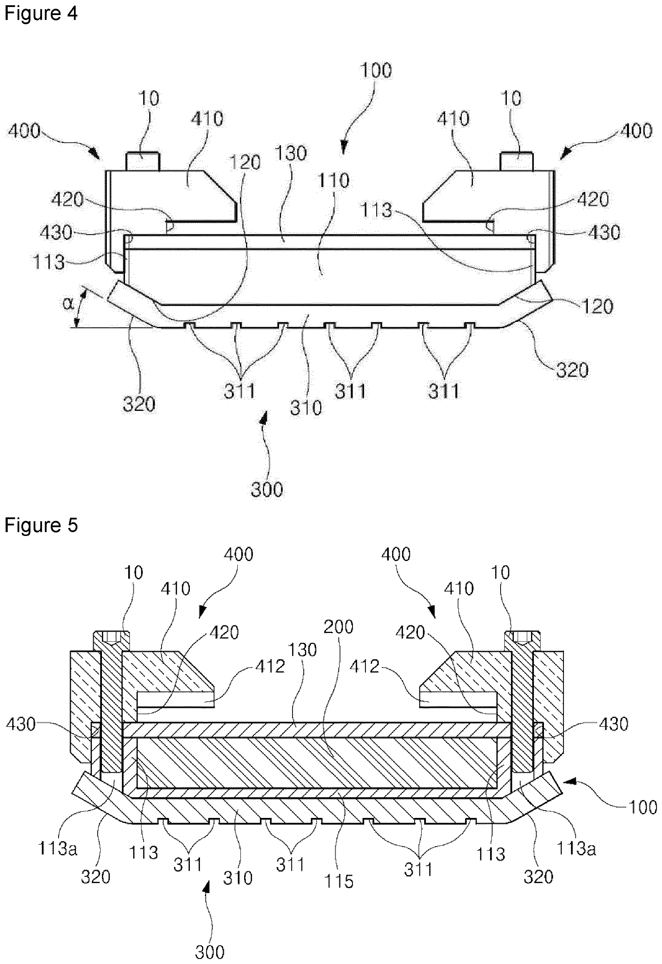

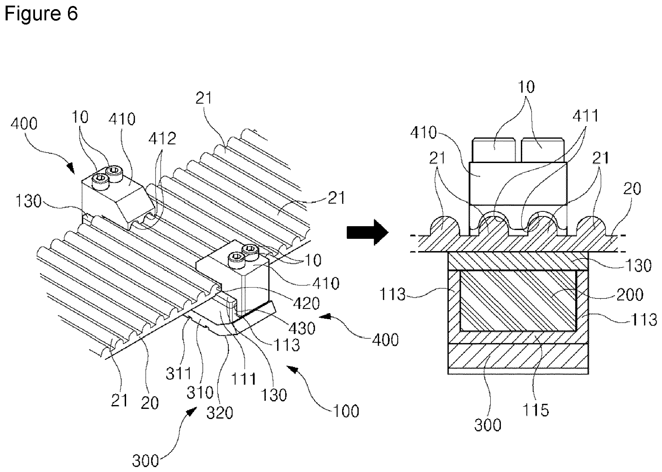

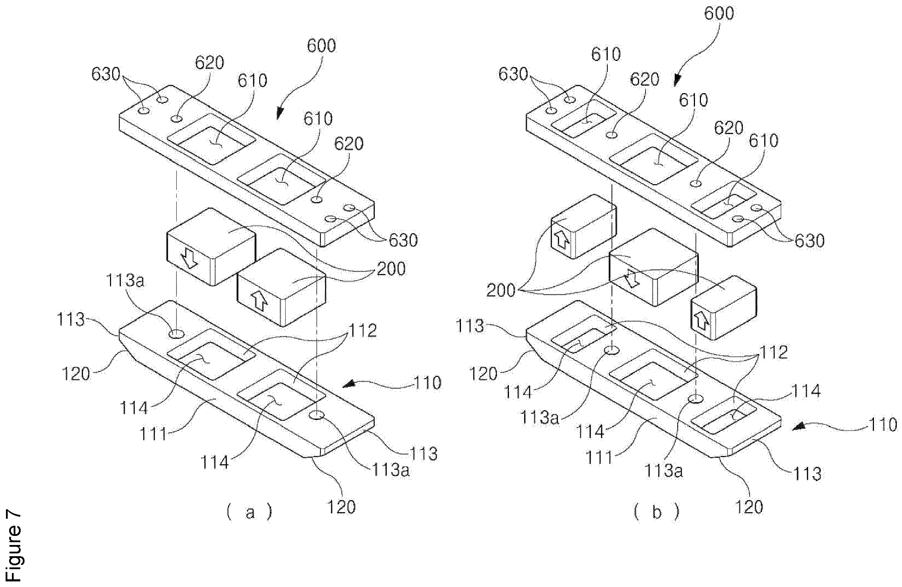

FIG. 1 schematically illustrates that a lateral side of a frictional member collides with a welding bead present on the surface of a ship while a track shoe slides transversely to a traveling direction of continuous tracks when an apparatus using the continuous tracks rotates in place, FIG. 2 schematically illustrates a magnetic track shoe for a ship cleaning apparatus according to a first embodiment of the disclosure, FIG. 3 is an exploded perspective view of the magnetic track shoe in FIG. 2, FIG. 4 is a front view of the magnetic track shoe in FIG. 2, FIG. 5 is a cross-sectional view of the magnetic track shoe in FIG. 2, FIG. 6 illustrates that a magnetic track shoe according to an embodiment is coupled to a part of a belt, and FIG. 7 schematically illustrates that a plurality of magnet members according to an embodiment is provided, and the magnet members are disposed to be different in polarity.

As shown therein, a magnetic track shoe 1 for a ship cleaning apparatus according to an embodiment includes a track shoe body 100 to be placed on the surface of a ship, a magnet member 200 provided in the track shoe body 100 and attaching the track shoe body 100 to the surface of the ship, a frictional unit 300 provided in the track shoe body 100 and increasing frictional force while preventing the track shoe body 100 from damaging the surface of the ship, and a holding block 400 coupled to the track shoe body 100 and coupling the track shoe body 100 to a belt 20.

The track shoe body 100 may be disposed close to the surface of a ship, and provided as a coupling place between the magnet member 200 and the frictional unit 300.

As shown in FIG. 2, the track shoe body 100 in this embodiment includes a base body 110, a body inclined portion 120 provided in the base body 110, and a covering unit 130 coupled to an upper portion of the base body 110.

As shown in FIG. 3, the base body 110 of the track shoe body 100 includes a front wall 111, a rear wall 112 positioned facing the front wall 111 and spaced apart from the front wall 111, a pair of lateral walls 113 connecting the front wall 111 and the rear wall 112, and a bottom portion 115 blocking the bottom of an accommodating portion 114 formed by the front wall 111, the rear wall 112, and the pair of lateral walls 113.

The front wall 111 in this embodiment may be provided to face the same direction as a moving direction of the track shoe body 100.

Further, each lateral wall 113 in this embodiment may include a pair of body coupling holes 113a spaced apart from each other as shown in FIG. 3. In this embodiment, the lower end portions of a pair of fastening members 10 may for example be screw-coupled to the pair of body coupling holes 113a. In this embodiment, grooves may also be provided as an alternative to the pair of body coupling holes 113a.

Further, according to an embodiment as shown in FIG. 3, the accommodating portion 114 may be formed by the front wall 111, the rear wall 112, and the pair of lateral walls 113. In this embodiment, the accommodating portion 114 may include an upper side opened, and a lower side blocked by the bottom portion 115.

In addition, the base body 110 in this embodiment may be made of a publicly known non-magnetic material.

The body inclined portion 120 of the track shoe body 100 may, as shown in FIG. 3, be provided in a bottom portion of the lateral wall 113.

According to an embodiment, the frictional unit 300 includes a friction inclined portion 320 inclined corresponding to the body inclined portion 120, thereby preventing the edge of the frictional unit 300 from damage or peeling when the ship cleaning apparatus turns or rotates in place.

In addition, the body inclined portion 120 in this embodiment may be provided in each bottom portion of the pair of lateral walls 113.

Further, the friction inclined portion 320 in this embodiment may be inclined at a predetermined angle, e.g., the same angle as the angle α of the body inclined portion 120.

The covering unit 130 of the track shoe body 100 is coupled to the lateral wall 113 of the base body 110 by the fastening member 10 as shown in FIG. 5, and has a top surface to be in close contact with a bottom surface of the belt 20 as shown in FIG. 6. In other words, the covering unit 130 may be detachably coupled to the pair of lateral walls 113 in such a manner that the lower portions of the fastening members 10 pass through the plurality of first holes 131 formed in the covering unit 130 and are then fastened to body fastening grooves formed in the lateral wall 113.

The upper surface of the covering unit 130 in this embodiment may be pressed against a bottom surface of a first stepped portion 420 of the holding block 400 as shown in FIG. 5.

Further, the covering unit 130 in this embodiment may be made of a ferromagnetic substance to prevent magnetic fields of the magnet member 200 from spreading in directions other than the direction toward the surface of a ship.

Further, the covering unit 130 in this embodiment may be shaped like a rectangular plate, and may be molded, coated or plated to prevent corrosion.

The magnet member 200 may, as shown in FIG. 5, be provided inside the base body 110 and exert magnetic force to generate frictional force between the surface of a ship and the frictional unit 300. In this embodiment, the magnet member 200 may be accommodated in the accommodating portion 114 of the base body 110.

In this embodiment, the magnet member 200 includes a permanent magnet or an electromagnet.

Further, according to an embodiment, there may be a plurality of magnet members 200. In this embodiment, as shown in FIG. 7, the plurality of magnet members 200 may be provided, and a plurality of accommodating portions 114 may be provided corresponding to the magnet members 200. In this embodiment, the pole direction of the magnet member 200 is marked with an arrow, and the head of the arrow may indicate the N pole or the S pole.

If one magnet member 200 is used, the magnetic field widely spreads to the surroundings, thereby lowering efficiency. In this embodiment, a combination of two or more magnet members 200 is used, and the magnetic poles thereof are reversely disposed to prevent the magnetic field from spreading to the surroundings, thereby enhancing the efficiency of the force of the magnet member 200 being attached to an iron plate. Although it is not illustrated, a plurality of magnet members 200 may be assembled by a Halbach array method to concentrate the magnetic field in one direction.

Further, the magnet member 200 in this embodiment may be molded, coated or plated to prevent corrosion.

The frictional unit 300 is, as shown in FIGS. 2 and 4, coupled to the bottom portion of the base body 110, and serves to increase the frictional force while preventing the surface of a ship from being damaged by the base body 110.

The frictional unit 300 in this embodiment is, as shown in FIG. 4, includes a frictional body 310 of which a top surface is in close contact with a bottom surface of the base body 110, and the friction inclined portions 320 provided in the end portions of the frictional body 310.

In this embodiment, the bottom surface of the frictional body 310 may be formed with a draining groove 311 as shown in FIG. 4. In this embodiment, there may be a plurality of draining grooves 311 which are formed at regular intervals, e.g., equidistantly.
in this embodiment, the frictional body 310 and the friction inclined portion 320 may be provided as a single body, and may be made of a material that does not damage the surface of a ship and has high durability, for example, a material that contains rubber or urethane.

The friction inclined portion 320 of the frictional unit 300 may, as shown in FIG. 4, be provided in the frictional body 310, so that force due to collision with a protrusion such as a welding bead can be widely spread to the frictional unit 300, thereby preventing the frictional unit 300 from damage such as tearing or peeling.

The friction inclined portions 320 in this embodiment may be provided at the opposite end portions of the frictional body 310 and inclined upwards at a predetermined angle α, e.g., 3 to 60 degrees.

In addition, the frictional unit 300 in this embodiment may be coupled to the base body 110 by adhesive or publicly known bonding means.

The holding block 400 is fastened to the track shoe body 100 by the fastening member 10 as shown in FIG. 5, and serves to couple the track shoe body 100 to the belt 20 as shown in FIG. 6.

As shown in FIG. 6, the holding block 400 in this embodiment includes a block body 410 pressing the belt 20 in a direction of facing the covering unit 130 of the track shoe body 100, the first stepped portion 420 provided in the block body 410 and supporting a lateral side of the belt 20, and a second stepped portion 430 extended from the first stepped portion 420 and supporting the lateral side of the track shoe body 100.

The block body 410 of the holding block 400 includes a pair of second holes 411 as shown in FIG. 3, so that the lower portions of the pair of fastening members 10 can pass through the pair of second holes 411.

In this embodiment, as shown in FIGS. 3 and 6, the bottom surface of the block body 410 is formed with an uneven groove 412, so that an uneven member 21 provided in the belt 20 can be inserted in the uneven groove 412, thereby enhancing the coupling stability of the holding block 400.

In this embodiment, the uneven grooves 412 may form a pair and be spaced apart from each other on the bottom surface of the block body 410.

As shown in FIG. 6, the first stepped portion 420 of the holding block 400 may be extended downwards from the bottom surface of the block body 410 and support the lateral side of the belt 20. Further, as shown in FIG. 6, the bottom surface of the first stepped portion 420 may press the upper surface of the covering unit 130.

The second stepped portion 430 of the holding block 400 may, as shown in FIG. 6, be extended downwards from the end portion of the first stepped portion 420 and support the lateral side of the covering unit 130 and the lateral wall 113.

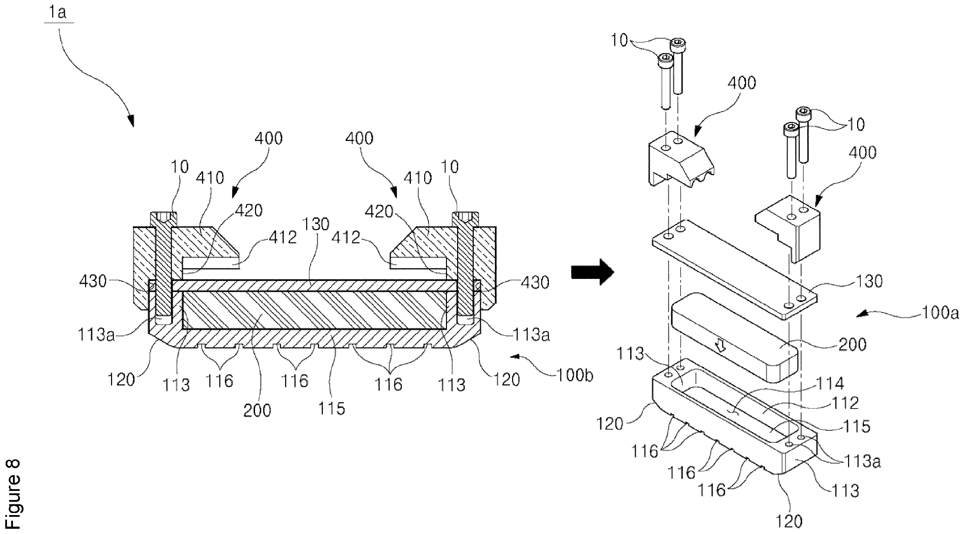

FIG. 8 schematically illustrates a magnetic track shoe for a ship cleaning apparatus according to a second embodiment of the disclosure.

As shown in FIG. 8, a magnetic track shoe 1a for a ship cleaning apparatus according to an embodiment is different from that of the foregoing first embodiment in that the bottom surface, i.e., the bottom portion 115 of the base body 110 of a track shoe body 100a is provided with a plurality of groove portions 116.

Further, in this embodiment, the bottom portion 115 of the track shoe body 100a and the body inclined portion 120 are coated with an anti-slip agent or attached with an anti-slip tape without the foregoing frictional unit 300 according to the first embodiment, thereby selectively using the frictional unit 300 and enhancing a work efficiency.

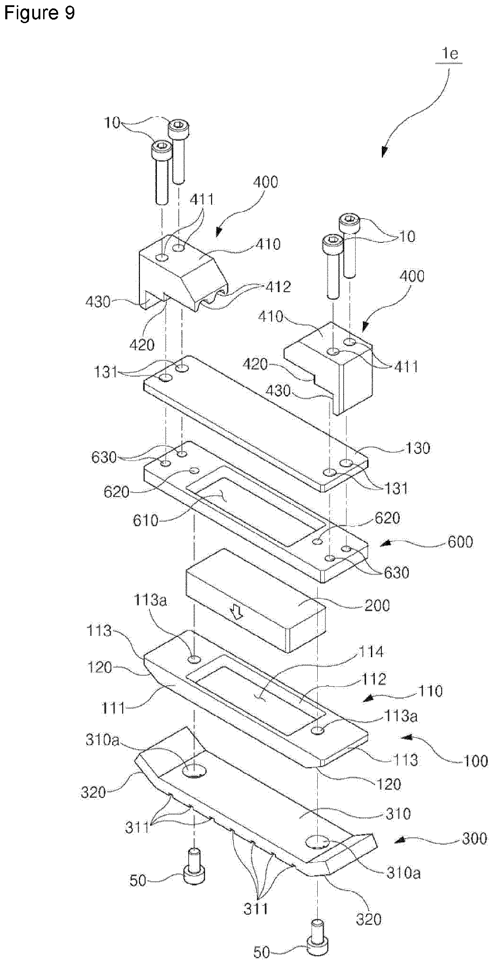

FIG. 9 schematically illustrates a magnetic track shoe for a ship cleaning apparatus according to a third embodiment of the disclosure.

As shown in FIG. 9, a magnetic track link 1e for a ship cleaning apparatus according to an embodiment is different from the foregoing first embodiment in a magnet guide 600 additionally provided between the base body 110 and the covering unit 130, and a fastening structure based on the magnet guide 600.

The magnet guide 600 includes a guide hole 610 provided at the center thereof and accommodating an upper portion of the magnet member 200.

In this embodiment, first coupling holes 620 may be provided at opposite sides of the guide hole 610, and the ends of second fastening members 50 may be screw-coupled or fitted to the pair of first coupling holes 620.

Further, the magnet guide 600 in this embodiment may include a pair of second coupling holes 630 provided at the edges thereof. In this embodiment, the first fastening member 10 may be detachably coupled to the pair of second coupling holes 630. In this embodiment, the first fastening member 10 may be screw-coupled or fitted to the second coupling hole 630.

Further, in this embodiment, the frictional unit 300 and the base body 110 may be detachably coupled to the magnet guide 600 by the plurality of second fastening members 50. To this end, as shown in FIG. 9, the frictional unit 300 may include a pair of fastening holes 310a spaced apart from each other, and the base body 110 may include a pair of first body coupling holes 113a positioned corresponding to the pair of fastening holes 310a.

In addition, this embodiment is different from the foregoing embodiments in that the lower end portion of the first fastening member 10 is coupled to the second coupling hole 630 provided in the magnet guide 600. As a result, according to this embodiment, the base body 110, the magnet member 200, and the frictional unit 300 may be separated by loosening in the state that the covering unit 130 and the magnet guide 600 are coupled to the belt 20.

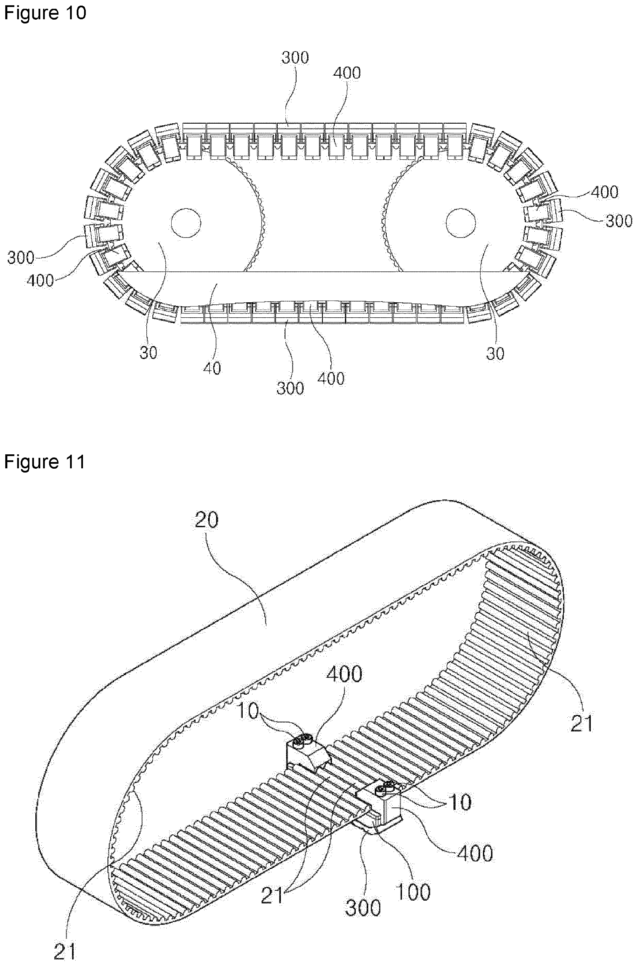

FIG. 10 schematically illustrates continuous tracks according to an embodiment, and FIG. 11 schematically illustrates that the magnetic track shoe according to an embodiment is coupled to the belt 20 shown in FIG. 10.

As shown in FIG. 10, this embodiment may be applied to the continuous tracks including a pair of pulleys 30 and a track guide 40.

The pair of pulleys 30 drives the belt 20, and includes an uneven region where the pulley 30 comes into contact with the belt 20.

The track guide 40 may be in contact with the lateral side of the holding block 400 and serve to block and prevent the continuous tracks according to this embodiment from being separated.

In this embodiment, the track guide 40 may include a recessed middle portion so that the continuous tracks can pass a protruding surface.

Further, the track guide 40 in this embodiment may be made of or coated with a material excellent in lubricity to reduce abrasion due to friction with the track shoe.

Although it is not illustrated in FIG. 10, the continuous tracks may include a tensioner for adjusting the tension of the belt 20, or a structure serving as the tensioner.

It will be obvious to those skilled in the art that the disclosure is not limited to the embodiments described above and various modifications and changes can be made without departing from the spirit and scope of the disclosure. Therefore, such modifications and changes fall within the scope of the appended claims of the disclosure.

**(Reference Numerals)**

| | | | |
|---|---|---|---|
| 1,1a,1e : | magnetic track shoe for ship cleaning apparatus | | |
| 100,100a : | track shoe body | 110: | base body |
| 111 : | front wall | 112 : | rear wall |
| 113 : | lateral wall | 113a : | first body coupling hole |
| 113b : | second body coupling hole | 114 : | accommodating portion |
| 115 : | bottom portion | 116 : | groove portion |
| 120 : | body inclined portion | 130 : | covering unit |
| 131 : | first hole | 200 : | magnet member |
| 300 : | frictional unit | 310 : | frictional body |
| 310a : | fastening hole | 311 : | draining groove |
| 320 : | friction inclined portion | 400 : | holding block |
| 410 : | block body | 411 : | second hole |
| 412 : | uneven groove | 420 : | first stepped portion |
| 430 : | second stepped portion | 600 : | magnet guide |
| 610 : | guide hole | 620 : | first coupling hole |
| 630 : | second coupling hole | 10 : | first fastening member |
| 20 : | belt | 21 : | uneven member |
| 30 : | pulley | 40 : | track guide |
| 50 : | second fastening member. | | |

## Claims

1. A magnetic track shoe comprising:
a track shoe body of continuous tracks attached to a surface of a ship;
a magnet member provided in the track shoe body and attaching the track shoe body to the surface of the ship; and
a frictional unit provided in the track shoe body and preventing the track shoe body from damaging the surface of the ship,
wherein the track shoe body comprises a body inclined portion, and the frictional unit comprises a friction inclined portion corresponding to the body inclined portion to prevent the frictional unit from being damaged by a protrusion provided in the surface of the ship.

2. The magnetic track shoe of claim 1, wherein
the body inclined portion is provided in at least one of a left bottom portion and a right bottom portion of the track shoe body with respect to a traveling direction of the continuous tracks, and
the friction inclined portion is provided in at least one of a left bottom portion and a right bottom portion of the frictional unit with respect to the traveling direction of the continuous tracks.

3. The magnetic track shoe of claim 1, wherein
the track shoe body comprises:
a front wall provided to face a same direction as the traveling direction of the continuous tracks;
a rear wall provided at an opposite position to the front wall and disposed to be spaced apart from the front wall;
a pair of lateral walls connecting the front wall and the rear wall; and
a base body blocking a bottom of an accommodating portion formed by the front wall, the rear wall, and the pair of lateral walls, and
the body inclined portion is provided in at least one lateral wall of the pair of lateral walls.

4. The magnetic track shoe of claim 1, wherein
the frictional unit comprises:
a frictional body of which an upper surface is in contact with a bottom surface of the track shoe body; and
the friction inclined portion provided at an end portion of the frictional body.

5. The magnetic track shoe of claim 4, wherein
the frictional unit further comprises a draining groove provided on a bottom portion of the frictional body.

6. The magnetic track shoe of claim 3, wherein
the track shoe body further comprises a covering unit coupled to the base body to cover the accommodating portion.

7. The magnetic track shoe of claim 6, wherein
the track shoe body further comprises a plurality of groove portions provided on a bottom surface of the bottom portion, and
the frictional unit is provided by coating an anti-slip agent or attaching an anti-slip tape to the bottom portion and the body inclined portion.

8. The magnetic track shoe of claim 1, wherein
the magnet member is molded, coated or plated to prevent corrosion.

9. The magnetic track shoe of claim 1, further comprising a holding block coupled to the track shoe body and coupling the track shoe body to a belt.

10. The magnetic track shoe of claim 9, wherein
the holding blocks form a pair and are coupled to the belt while facing each other, and
the holding block comprises:
a block body pressing the belt in a direction of facing the track shoe body;
a first stepped portion provided in the block body and supporting a lateral side of the belt; and
a second stepped portion extended from the first stepped portion and supporting a lateral side of the track shoe body.

11. The magnetic track shoe of claim 10, wherein
the belt comprises a plurality of uneven members, and
the block body comprises an uneven groove in which the uneven member is inserted.

12. The magnetic track shoe of claim 1, further comprises a magnet guide provided between the base body and the covering unit of the track shoe body and accommodating an upper portion of the magnet member.

13. The magnetic track shoe of claim 12, wherein
the base body and the frictional unit are detachably coupled to the magnet guide.

14. The magnetic track shoe of claim 1 or 12, wherein
the magnet member comprises a plurality of magnet members, and
the magnet members disposed adjacent to each other are different in polarity.

15. The magnetic track shoe of claim 1, further comprising a track guide coupled to the continuous tracks and recessed in a middle portion thereof.
